# EUROPEAN PATENT SPECIFICATION

(11) **EP 4 231 147 B1**
(45) Date of publication and mention of the grant of the patent: **25.03.2026**
(21) Application number: 21891205.3
(22) Date of filing: 12.11.2021
(51) Int. Cl.: G06F 9/50, G06T 1/20, G06T 7/10, G06T 15/00

(54) **DRAWING COMMAND PROCESSING METHOD AND RELATED DEVICE THEREFOR**
ZEICHNUNGSBEFEHLSVERARBEITUNGSVERFAHREN UND ZUGEHÖRIGE VORRICHTUNG DAFÜR
PROCÉDÉ DE TRAITEMENT DE COMMANDE DE DESSIN ET DISPOSITIF ASSOCIÉ

(30) Priority: 13.11.2020 CN 202011271672
(43) Date of publication of application: 23.08.2023
(73) Proprietor: Huawei Technologies Co., Ltd., Shenzhen, Guangdong 518129 (CN)
(72) Inventor: SHANG, Qin, Shenzhen, Guangdong 518129 (CN); XU, Liangcheng, Shenzhen, Guangdong 518129 (CN); ZHANG, Zhibo, Shenzhen, Guangdong 518129 (CN)
(74) Representative: Grünecker Patent- und Rechtsanwälte PartG mbB
(86) International application number: PCT/CN2021/130249
(87) International publication number: WO 2022/100685

(56) References cited:
- CN-A- 110 515 623
- CN-A- 110 515 623
- CN-A- 110 647 325
- CN-A- 111 724 293
- US-B1- 9 632 848
- US-B1- 9 632 848

## Description

The present disclosure claims priority to Chinese Patent Application No. 202011271672.8, filed with the China National Intellectual Property Administration on November 13, 2020, and entitled "DRAWING COMMAND PROCESSING METHOD AND RELATED DEVICE THEREOF".

### TECHNICAL FIELD

The present disclosure relates to the computer field, and in particular, to a drawing command processing method and a related device thereof.

### BACKGROUND

OpenGL (Open graphics library) is a professional graphics programming interface that defines a crossprogramming-language and cross-platform programming interface specification, and is used in the industries such as content creation, energy, entertainment, game development, manufacturing industry, pharmaceutical industry, and virtual reality. The OpenGL can help a programmer develop high-performance and high-visual expressive graphics processing software on a hardware device, for example, a personal computer (personal computer, PC), a workstation, or a supercomputer.

The OpenGL has become one of the most commonly used graphics application programming interfaces (application programming interfaces, APIs) for games, and is widely used for interaction of a graphics processing unit (graphics processing unit, GPU) and hardware acceleration. With development of hardware resources, people have found disadvantages of the OpenGL. Currently, a multi-core architecture is becoming increasingly common. However, the OpenGL can provide only limited single-threaded load, and is difficult to make a breakthrough in a frame rate or energy consumption. Vulkan resolves this problem well. The Vulkan better abstracts a modem graphics card, and supports multithreaded rendering. Compared with the OpenGL, the Vulkan greatly reduces API overheads consumed when a CPU provides an important feature, performance, and image quality. However, due to a huge quantity of OpenGL applications, replacing the OpenGL by the Vulkan is a slow process. Therefore, in the industry, an OpenGL-based drawing command is converted into a Vulkan-based drawing command, to be compatible with the OpenGL application. CN 110 515 623 A relates to the technical field of computer graphics, and in particular to a method, device, electronic device, and storage medium for implementing graphics operations. US 9 632 848 B1 relates to a system and method for allocating commands in processing is disclosed. The system and method includes an application running on a computer system that provides commands to be executed on one of a plurality of processors capable of executing the commands, the commands provided through an application programming interface, a device driver that buffers the streamed commands and converts the streamed commands into a format used by a GPU, and an operating system that builds a command buffer by grouping a plurality of converted commands based on an allocation for an available processor, wherein the available processor is determined in the interface between the device driver and the operating system.

In an existing implementation of a current OpenGL-to-Vulkan drawing command conversion technology, OpenGL-based drawing commands of an entire render pass are usually directly converted into Vulkan-based drawing commands, and then the rendering instructions of the entire render pass are submitted to a GPU. However, actually, the render pass may include a large quantity of drawing commands, and the GPU can work only after the CPU completes OpenGL-to-Vulkan drawing command conversion for a long time, causing a waste of GPU resources.

### SUMMARY

The present invention is defined according to the independent claims. The dependent claims recite advantageous embodiments of the invention.
According to a first aspect, the present disclosure provides a drawing command processing method. The method is applied to a terminal device, the terminal device includes a graphics processing unit GPU, and the method includes:
obtaining M₁ first drawing commands, where the M₁ first drawing commands belong to a same render pass, the render pass further includes M₂ third drawing commands, M₁ and M₂ are positive integers, each of the M₁ first drawing commands and the M₂ third drawing commands is an open graphics library OpenGL for embedded systems-drawing command, and that each of the M₁ first drawing commands and the M₂ third drawing commands is an open graphics library OpenGL for embedded systems-drawing command may be understood as follows: the M₁ first drawing commands and the M₂ third drawing commands are all used to call an OpenGL-related API, the M₁ first drawing commands belong to the same render pass, and the render pass further includes the M₂ third drawing commands; and converting the M₁ first drawing commands into Vulkan-based drawing commands to obtain at least one second drawing command, where the second drawing instruction is a Vulkan-based drawing command. Specifically, a CPU may successively obtain the first drawing commands according to an arrangement order of the drawing commands in the render pass. Each time a first drawing command is obtained, the first drawing command is converted into a Vulkan-based drawing command to obtain a corresponding second drawing command until an (M₁)^{th} first drawing command in the render pass is obtained, in other words, the CPU completes conversion of some drawing commands in the render pass. The method further includes: submitting the at least one second drawing command to the GPU before completing conversion from the M₂ third drawing commands to Vulkan-based drawing commands, so that the GPU executes a drawing task. The method further includes obtaining the current drawing frame rate and the current load of the GPU; and determining a value of M₁ based on the drawing frame rate and the load. When the drawing frame rate of the GPU and a drawing frame rate of a DDR are the same, higher load indicates larger M₁; and when the load of the GPU and load of the DDR are the same, a higher drawing frame rate indicates larger M₁.

The drawing command (which may also be referred to as a rendering instruction or a rendering command) is an instruction used to draw (also referred to as generate) a drawing target in an image frame, for example, an OpenGL-based draw call (draw call) (namely, a command called by the CPU for an underlying graphics drawing interface). The "drawing command" in the present disclosure may be one instruction, for example, one API call function; or may be a set of a plurality of instructions. For example, in OpenGL, one OpenGL-based draw call usually includes a plurality of API call functions, and the one draw call may be considered as one drawing command used to complete drawing once. One draw call may draw one drawing target, a plurality of draw calls may draw one drawing target, or one draw call may draw a plurality of drawing targets.

A specific value of M₁ may be determined based on a quantity of drawing commands included in the render pass. In an implementation, the CPU may determine, based on a pre-configured render pass segmentation model, which drawing commands in the render pass are submitted. Render passes that include different quantities of drawing commands may correspond to different render pass segmentation models. For example, for a render pass that includes a large quantity of drawing commands or that indicates an excessive quantity of vertices that need to be drawn in the drawing commands, a corresponding render pass segmentation model may specify that the drawing commands in the render pass are segmented into more parts. Specifically, if a quantity of draw calls and a quantity of vertices of a render pass of a current frame are large, it indicates that the render pass is heavily loaded. After the draw calls are converted to Vulkan-based commands, the Vulkan-based commands need to wait for a long time before being completely submitted to the GPU. Therefore, the render pass needs to be segmented. A segmentation point is added to the original render pass to segment the render pass into several render passes, and the Vulkan-based commands are submitted to the GPU.

Different from the conventional technology in which converted drawing commands are submitted to the CPU only after conversion of all drawing commands in one render pass is completed, in this embodiment of the present disclosure, drawing commands are submitted to the GPU after conversion of some drawing commands in the render pass is completed, to avoid low GPU utilization caused because the CPU does not submit the Vulkan-based commands to the GPU in time in a process of converting the OpenGL-based commands into the Vulkan-based commands. This can maximize GPU utilization in some game scenarios, and improve a frame rate.

Here, the value of M₁ may be determined based on the current drawing frame rate and the current load of the GPU. When the load of the GPU is large, because the GPU is in a busy state at this case, the CPU can submit drawing commands to the GPU only after completing conversion of a large quantity of drawing commands. This reduces overheads of submitting the drawing commands by the CPU on a premise that it is ensured that the GPU does not have a long idle time. In addition, when the drawing frame rate of the GPU is high, it is difficult to increase the drawing frame rate of the GPU even if usage of the GPU is increased. Therefore, the CPU can submit the drawing commands to the GPU only after completing conversion of the large quantity of drawing commands. This reduces the overheads of submitting the drawing commands by the CPU on the premise that it is ensured that the GPU does not have the long idle time. The value of M₁ is determined based on the current drawing frame rate and the current load of the GPU, so that a quantity of drawing commands submitted each time is dynamically controlled.

In a possible implementation, the render pass includes N drawing commands arranged in a preset order, and the preset order indicates an execution order of the drawing commands. The execution order is a sequence that is of code including the rendering instructions and that is specified in a game file, and the sequence indicates a time sequence in which the CPU processes the drawing commands. The M₁ first drawing commands are first M₁ drawing commands arranged in the N drawing commands, and N is greater than or equal to a positive integer of a sum of M₁ and M₂.

In a possible implementation, the terminal device further includes an image processing buffer, and the method further includes: storing the at least one second drawing command to the image processing buffer after converting the M₁ first drawing commands into the Vulkan-based drawing commands to obtain the at least one second drawing command; and
the submitting the at least one second drawing command to the GPU before completing conversion from the M₂ third drawing commands to Vulkan-based drawing command includes:
submitting the at least one second drawing command to the GPU on a basis that a to-be-submitted drawing command stored in the image processing buffer meets a first preset condition, where the first preset condition includes at least one of the following:
a quantity of to-be-submitted drawing commands in the image processing buffer reaches M₁; and
a quantity of vertices that need to be drawn for the to-be-submitted drawing command in the image processing buffer is equal to or exceeds a preset value, where a quantity of vertices that need to be drawn for the at least one second drawing command is equal to or exceeds the preset value.

In a possible implementation, the submitting the at least one second drawing command to the GPU includes:
submitting the at least one second drawing command to the GPU on a basis that the GPU meets a second preset condition, where the second preset condition includes at least one of the following:
current load of the GPU is less than a preset value; and
a current drawing frame rate of the GPU is less than a preset frame rate.

In this embodiment of the present disclosure, if the CPU determines that a quantity of currently converted drawing commands meets a requirement, the CPU may further obtain the current load of the GPU, and determine whether the current load of the GPU is less than the preset value (which may also referred to as a load threshold that may be flexibly configured based on different scenarios). If the current load of the GPU is less than the load threshold, it indicates that the GPU is currently in an idle state. In this case, the converted drawing commands may be submitted to the GPU. Otherwise, a next draw call continues to be converted until the load of the GPU is less than the preset value, or the converted drawing commands are submitted to the GPU after conversion of all the drawing commands in the rendering instruction is completed.

If the CPU determines that the quantity of currently converted drawing commands meets the requirement, the CPU may further obtain the current drawing frame rate of the GPU, and determine whether the current drawing frame rate of the GPU is less than the preset frame rate (the preset frame rate may be flexibly configured based on different scenarios). If the current drawing frame rate of the GPU is less than the preset frame rate, the converted drawing commands may be submitted to the GPU. Otherwise, the next draw call continues to be processed until the load of the drawing frame rate of the GPU is less than the preset frame rate, or the converted drawing commands are submitted to the GPU after conversion of all the drawing commands in the rendering instruction is completed.

In this embodiment of the present disclosure, in addition to the fact that the quantity of currently converted first drawing commands in the render pass reaches M₁, the CPU may further determine whether the to-be-submitted drawing command stored in the image processing buffer meets the first preset condition and whether the GPU meets the second preset condition before submitting the at least one second drawing command to the GPU. Specifically, when the CPU processes the drawing command in the render pass, the CPU may obtain the current drawing frame rate of the GPU. If the frame rate is a full frame rate (or higher than or equal to the preset frame rate), the render pass ends. If the frame rate is not the full frame rate (or lower than the preset frame rate), a segmentation model of a previous frame is obtained from a buffered segmentation model (referred to as the render pass segmentation model in the foregoing embodiment). When the drawing command in the render pass is processed, whether a segmentation point exists is determined each time after a drawing command is converted. If the segmentation point exists, the current load of the GPU is obtained. In addition, when the load of the GPU is less than the load threshold, a converted to-be-submitted drawing command is submitted to the GPU. If no segmentation point exists or the current load of the GPU is higher than the load threshold, conversion of a next drawing command in the render pass is continued.

It should be understood that, when no technical contradiction exists, the conditions in the first preset condition and the second preset condition may be mutually combined to form a basis for determining whether to submit the at least one second drawing command to the GPU.

In a possible implementation, the method further includes:
converting the M₂ third drawing commands into the Vulkan-based drawing commands to obtain at least one fourth drawing command, where the fourth drawing instruction is a Vulkan-based drawing command; and
submitting the at least one fourth drawing command to the GPU, so that the GPU executes a drawing task.

After submitting the at least one second drawing command to the GPU, the CPU may convert the M₂ third drawing commands into the Vulkan-based drawing commands to obtain the at least one fourth drawing command, and submit the at least one fourth drawing command to the GPU, so that the GPU executes the drawing task. In other words, the CPU may further segment or submit all of remaining unconverted drawing commands in the render pass, and submit some or all of the remaining unconverted drawing commands in the render pass to the GPU after completing conversion of some or all of the drawing commands in the remaining unconverted drawing commands in the render pass.
the present disclosurethe present disclosureAccording to a further aspect, the present disclosurethe present disclosure provides a drawing command processing apparatus. The apparatus is used in a terminal device, the terminal device includes a graphics processing unit GPU, and the apparatus configured to perform the method according to the first aspect. the present disclosure
the present disclosurethe present disclosure According to a seventh aspect, the present disclosurethe present disclosure provides a non-volatile computer-readable storage medium. The non-volatile computer-readable storage medium includes computer instructions used to perform the drawing command processing method according to any one of the first aspect and the optional implementations of the first aspect.
the present disclosure According to a ninth aspect, the present disclosure further provides a computer program product, including code, and when being executed, the code is used to implement the drawing command processing method according to any one of the first aspect and the optional implementations of the first aspect.
the present disclosure The present disclosure provides a drawing command processing method. The method is applied to the terminal device, the terminal device includes the graphics processing unit GPU, and the method includes: obtaining the M₁ first drawing commands, where the M₁ first drawing commands belong to the same render pass, the render pass further includes the M₂ third drawing commands, M₁ and M₂ are positive integers, and each of the M₁ first drawing commands and the M₂ third drawing commands is an open graphics library OpenGL for the embedded systembased drawing command; converting the M₁ first drawing commands into the Vulkan-based drawing commands to obtain the at least one second drawing command, where the second drawing instruction is a Vulkan-based drawing command; and submitting the at least one second drawing command to the GPU before completing conversion from the M₂ third drawing commands into the Vulkan-based drawing commands, so that the GPU executes the drawing task. Drawing commands are submitted to the GPU after conversion of some drawing commands in the render pass is completed, to avoid low GPU utilization caused because the CPU does not submit the Vulkan-based commands to the GPU in time in the process of converting the OpenGL-based commands into the Vulkan-based commands. This can maximize GPU utilization in some game scenarios, and improve the frame rate.

### BRIEF DESCRIPTION OF DRAWINGS

FIG. 1 is a schematic diagram of a structure of an electronic device according to the present disclosure;
FIG. 2 is a schematic diagram of a structure of an electronic device according to the present disclosure;
FIG. 3 is a schematic flowchart of a drawing command processing method according to an embodiment;
FIG. 4 is a schematic diagram of a render pass according to an embodiment;
FIG. 5 is a schematic diagram of a render pass according to an embodiment;
FIG. 6 is a schematic diagram of a render pass according to an embodiment;
FIG. 7 is a schematic diagram of drawing command processing according to an embodiment;
FIG. 8 is a schematic diagram of a drawing command processing method according to an example of the present disclosure;
FIG. 9 is a schematic diagram of a render pass according to an embodiment;
FIG. 10 is a schematic diagram of a render pass according to an embodiment;
FIG. 11 is a schematic diagram of a system architecture according to the present disclosure;
FIG. 12 is a schematic diagram of a drawing command processing method according to an example of the present disclosure;
FIG. 13 is a schematic diagram of a drawing command processing apparatus according to an embodiment of the present disclosure;
FIG. 14 is a schematic diagram of a drawing command processing apparatus according to an embodiment of the present disclosure; and
FIG. 15 is a schematic diagram of a structure of a terminal device according to the present disclosure.

### DESCRIPTION OF EMBODIMENTS

The following describes embodiments of the present disclosure with reference to accompanying drawings. It is clear that the described embodiments are merely some but not all of embodiments of the present disclosure. A person of ordinary skill in the art may learn that, with technology development and emergence of a new scenario, technical solutions provided in embodiments of the present disclosure are also applicable to a similar technical problem.

In the specification, claims, and the accompanying drawings of the present disclosure, the terms "first", "second", and so on are intended to distinguish between similar objects but do not necessarily indicate a specific order or sequence. It should be understood that the data termed in such a way is interchangeable in proper circumstances so that embodiments described herein can be implemented in other orders than the order illustrated or described herein. Moreover, terms "include", "contain", and any other variants mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device. Names or numbers of steps in the present disclosure do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

A command in embodiments of the present disclosure may also be referred to as an instruction. In some implementations, the instruction may include information such as an instruction name (or referred to as a function name) and a parameter. The instruction name may also be considered as a type of "parameter". In some implementations, the instruction may be further split into more instructions. For example, after an instruction is internally expanded, a plurality of functions are called in essence, and each function has its own parameter. In this case, a parameter of the instruction includes an internal function name and a parameter of the function. There are a plurality of computer systems and a plurality of program languages. Therefore, there are a plurality of forms of instructions. A specific form of the instruction is not limited in the present disclosure.

A drawing command (which may also be referred to as a rendering instruction or a rendering command) is an instruction used to draw (also referred to as generate) a drawing target in an image frame, for example, an OpenGL-based draw call (draw call) (namely, a command called by a CPU for an underlying graphics drawing interface). Optionally, the drawing target may be represented by using data stored in a memory. Correspondingly, a drawing target set generated based on rendering commands may form display data of a corresponding graphics frame. For example, it is assumed that an image frame includes a character A and a character B, a rendering command of the image frame may include one or more rendering commands used to generate a drawing target of the character A, and one or more rendering commands used to generate a drawing target of the character B. Correspondingly, a GPU can obtain display data of the image frame by running these rendering commands. In OpenGL, the rendering command is also referred to as the rendering instruction, and the drawing target is also referred to as a rendering target. In the present disclosure, the OpenGL is used as an example to describe an implementation method. However, the present disclosure is not limited to the OpenGL, and may also be applied to another type of graphics library. The rendering command carries a drawing parameter. This drawing parameter is used to generate the drawing target. Further, the rendering command may further carry drawing model information, and the drawing model information indicates a drawing model based on which the drawing target is generated. The GPU can generate the drawing target by running the rendering command, where the drawing target uses the drawing model as a basic shape and a shape feature meets the drawing parameter.

For example, the drawing command carries drawing model information of a drawing model that is a frontstanding King Arthur (the King Arthur is a role in a game), carries a drawing parameter indicating that the drawing model is to be turned to the left as a whole by 30 degrees, and carries parameter information that indicates lighting, a material, and the like of the King Arthur in the image frame. In this case, after running the rendering command, the GPU may obtain image data representing that the King Arthur is turned to the left as a whole by 30 degrees and the information such as lighting and the material is added.

The "drawing command" in the present disclosure may be one instruction, for example, one API call function; or may be a set of a plurality of instructions. For example, in the OpenGL, one OpenGL-based draw call usually includes a plurality of API call functions, and the one draw call may be considered as one drawing command used to complete drawing once. One draw call may draw one drawing target, a plurality of draw calls may draw one drawing target, or one draw call may draw a plurality of drawing targets. How to classify a drawing target is not limited in the present disclosure. For example, a house is an indivisible drawing target, or a house is a drawing target, but the drawing target includes two drawing targets: a roof and a wall.

A terminal device may implement various functions by installing different application software. When the terminal provides diversified functions, how to improve user experience on the terminal is an urgent problem to be resolved by each terminal vendor. Especially for a mobile terminal, power consumption and overheat of the terminal are important factors that affect user experience. Load of the GPU is one of factors that affect power consumption and overheat. For example, when the load of the GPU is high, a running frequency of the GPU is high. This causes problems of overheat and fast power consumption of the mobile terminal, and consequently, user experience is poor.

The OpenGL has become one of the most commonly used graphics application programming interfaces (application programming interfaces, APIs) for games, and is widely used for interaction of the graphics processing unit (graphics processing unit, GPU) and hardware acceleration. With development of hardware resources, people have found disadvantages of the OpenGL. Currently, a multi-core architecture is becoming increasingly common. However, the OpenGL can provide only limited single-threaded load, and is difficult to make a breakthrough in a frame rate or energy consumption. Vulkan resolves this problem well. The Vulkan better abstracts a modem graphics card, and supports multithreaded rendering. Compared with the OpenGL, the Vulkan greatly reduces API overheads consumed when the CPU provides an important feature, performance, and image quality. However, due to a huge quantity of OpenGL applications, replacing the OpenGL by the Vulkan is a slow process. Therefore, in the industry, an OpenGL-based rendering command is converted into a Vulkan-based rendering command, to be compatible with the OpenGL application.

In an existing implementation of a current OpenGL-to-Vulkan drawing command conversion technology, OpenGL-based drawing commands of an entire render pass are usually directly converted into Vulkan-based drawing commands, and then the drawing instructions of the entire render pass are submitted to the GPU. However, actually, the render pass may include a large quantity of drawing commands, and the GPU can work only after the CPU completes OpenGL-to-Vulkan drawing command conversion for a long time, causing a waste of GPU resources.

Specifically, in a conventional OpenGL, there is no interface to explicitly submit a command to a GPU for execution, and the command can be submitted only when a render pass is switched. A modern graphics API Vulkan provides a vkQueueSubmit interface to explicitly control a submission occasion. An application can perform fine-grained optimization based on this feature. In an existing implementation, only one render pass of the OpenGL is converted into one render pass of the Vulkan, to perform vkQueueSubmit submission in a unified manner. In an ideal situation, a quantity of drawing commands (draw calls) of each render pass in the OpenGL is evenly distributed. In most scenarios, the quantity of drawing commands (draw calls) of each render pass in the OpenGL is not evenly distributed. A quantity of drawing commands (draw calls) of a part of the render pass is small, and a quantity of drawing commands (draw calls) of the other part of the render pass is large. A drawing command (draw call) in a render pass of the OpenGL is converted into a drawing command (draw call) in the Vulkan, and the drawing command (draw call) in the Vulkan can be submitted to the GPU and processed by the GPU quickly. In this case, the GPU is in an idle state. Drawing commands (draw calls) in a next render pass are not submitted to the GPU until all the drawing commands (draw calls) in the next render pass are converted. Because the GPU is in the idle state during this period, GPU computing resource utilization is low.

To resolve the foregoing problem, the present disclosure provides a drawing command processing method.

The following first describes an application architecture of the present disclosure. The drawing command processing method provided in this embodiment of the present disclosure may be applied to a terminal device. The terminal device may also be referred to as user equipment (user equipment, UE) or an electronic device, and may be deployed on land, and includes an indoor or outdoor device, a hand-held device, or a vehicle-mounted device. The terminal device may alternatively be deployed on water (for example, on a ship), or may be deployed in the air (for example, on an airplane, a balloon, or a satellite). The electronic device may be a mobile phone (mobile phone), a pad (pad), a wearable device (such as a smartwatch) having a wireless communication function, a location tracker having a positioning function, a computer having a wireless transceiver function, a virtual reality (virtual reality, VR) device, an augmented reality (augmented reality, AR) device, a wireless device in a smart home (smart home), or the like. This is not limited in the present disclosure. In the present disclosure, the foregoing electronic device and a chip that can be disposed in the foregoing electronic device are collectively referred to as an electronic device.

The electronic device in the present disclosure may include but is not limited to a smart mobile phone, a television, a pad, a wristband, a head mount display (Head Mount Display, HMD) device, an augmented reality (augmented reality, AR) device, a mixed reality (mixed reality, MR) device, a cellular phone (cellular phone), a smartphone (smartphone), a personal digital assistant (personal digital assistant, PDA), a tablet computer, a vehicle-mounted electronic device, a laptop computer (laptop computer), a personal computer (personal computer, PC), a monitoring device, a robot, a vehicle-mounted terminal, an autonomous vehicle, and the like. Certainly, in the following embodiments, a specific form of the electronic device is not limited.

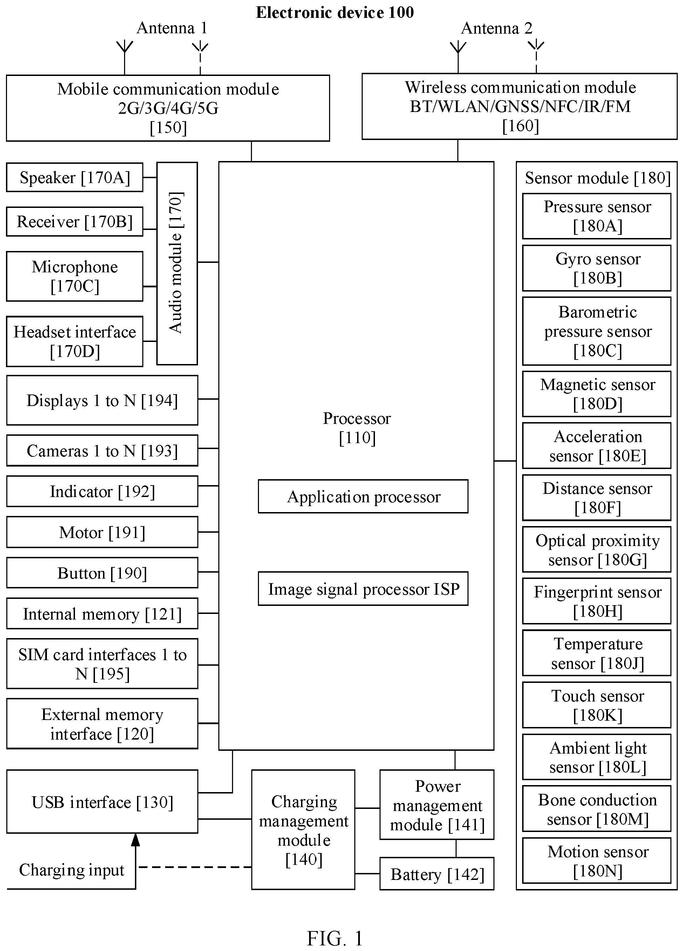

For example, refer to FIG. 1. The following uses a specific structure as an example to describe a structure of the electronic device provided in the present disclosure.

A electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a motion sensor 180N, and the like.

It may be understood that the structure shown in this embodiment of the present invention does not constitute a specific limitation on the electronic device 100. In some other embodiments of the present disclosure, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor 110 may directly call the instructions or the data from the memory, to avoid repeated access and reduce waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 and the wireless communication module 160 may be coupled through a PCM bus interface. In some embodiments, the audio module 170 may also transmit an audio signal to the wireless communication module 160 through the PCM interface, to implement the function of answering a call through the Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is generally used to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may further be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of the present disclosure, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include but is not limited to a fifth generation mobile communication technology (5th-Generation, 5G) system, a global system for mobile communication (global system for mobile communication, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), Bluetooth (Bluetooth), a global navigation satellite system (global navigation satellite system, GNSS), wireless fidelity (wireless fidelity, Wi-Fi), near field communication (near field communication, NFC), FM (also referred to as frequency modulation broadcasting), a Zigbee (Zigbee) protocol, a radio frequency identification (radio frequency identification, RFID) technology, an infrared (infrared, IR) technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), a satellite-based augmentation system (satellite-based augmentation system, SBAS), and/or the like.

In some implementations, the electronic device 100 may alternatively include a wired communication module (not shown in FIG. 1), or the mobile communication module 150 or the wireless communication module 160 herein may be replaced with a wired communication module (not shown in FIG. 1). The wired communication module may enable the electronic device to communicate with another device by using a wired network. The wired network may include but is not limited to one or more of the following: an optical transport network (optical transport network, OTN), a synchronous digital hierarchy (synchronous digital hierarchy, SDH), a passive optical network (passive optical network, PON), the Ethernet (Ethernet), the flexible Ethernet (flex Ethernet, FlexE), or the like.

The electronic device 100 may implement the display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function by using the audio module 170, the speaker 170A, the receiver 170B, the microphone 170C, the headset jack 170D, the application processor, and the like, for example, music playing or recording.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mic" or a "sound conducting device", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunication industry association of the USA (cellular telecommunication industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may alternatively calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may further be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a leather case of a flip cover through the magnetic sensor 180D. In some embodiments, when the electronic device 100 is a clamshell phone, the electronic device 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of a touch event. The display 194 may provide a visual output related to the touch operation. In some other embodiments, the touch sensor 180K may alternatively be disposed on a surface of the electronic device 100, and a location of the touch sensor 180K is different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The motion sensor 180N may be configured to detect a moving object in a shooting range of the camera, and collect a moving contour or a moving track of the moving object. For example, the motion sensor 180N may be an infrared sensor, a laser sensor, a dynamic vision sensor (dynamic vision sensor, DVS), or the like. The DVS may specifically include a sensor such as a DAVIS (Dynamic and Active-pixel Vision Sensor), an ATIS (Asynchronous Timebased Image Sensor), or a CeleX sensor. The DVS draws on a characteristic of biological vision. Each pixel simulates a neuron and responds independently to a relative change in light intensity (hereinafter referred to as "light intensity"). When the relative change of light intensity exceeds a threshold, the pixel outputs an event signal, including a pixel position, a time stamp, and light intensity characteristic information.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration alert. The motor 191 may be configured to provide an incoming call vibration prompt and a touch vibration feedback. For example, touch operations performed on different applications (for example, photographing and audio playing) may correspond to different vibration feedback effect. Touch operations performed on different areas of the display 194 may also correspond to different vibration feedback effect. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may alternatively be compatible with different types of SIM cards. The SIM card interface 195 may alternatively be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of the present invention, an Android system of a layered architecture is used as an example to illustrate a software structure of the electronic device 100.

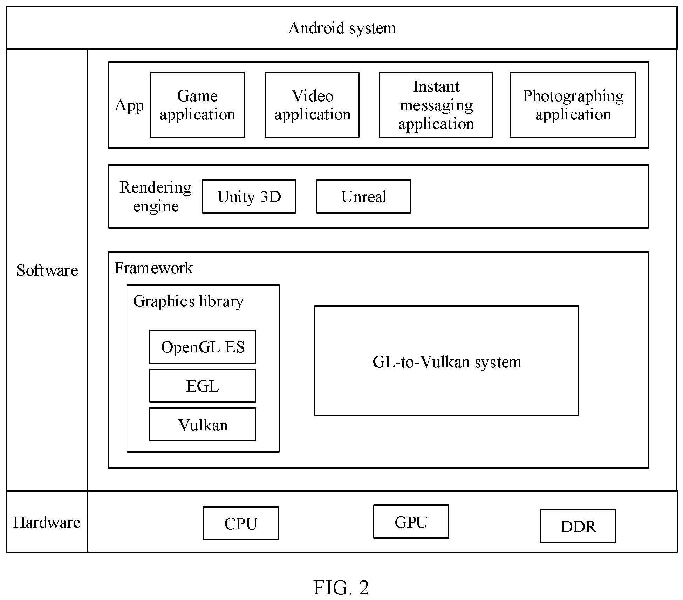

As shown in FIG. 2, an electronic device 100 includes software and hardware, and the hardware includes a CPU, a GPU, a DDR, and the like. For a structure of the electronic device 100, refer to FIG. 1. Details are not described herein again.

It should be understood that the software and the hardware shown in FIG. 2 are merely examples. In another embodiment, another type of software or hardware may be used. For example, in FIG. 2, the DDR is used as a video RAM. In another embodiment, the video RAM may alternatively be a synchronous dynamic random access memory (synchronous dynamic random access memory, SDRAM) or another type of memory.

The software includes applications (Apps), a rendering engine, and a framework (framework). The applications include a game application, a video application, an instant messaging application, a photographing application, and the like. The rendering engine includes one or more engines, for example, a rendering engine such as Unity 3D/Unreal. The framework includes various graphics libraries, such as an open graphics library for embedded systems (open graphics library for embedded systems, OpenGL ES), EGL (an interface between graphics rendering APIs and a native platform windowing system), or Vulkan (a cross-platform drawing application programing interface). Further, the solution provided in embodiments may be set in the framework, and presented as a GL (or referred to as OpenGL)-to-Vulkan system. After being executed, the GL-to-Vulkan system is used to implement the drawing command processing method provided in embodiments.

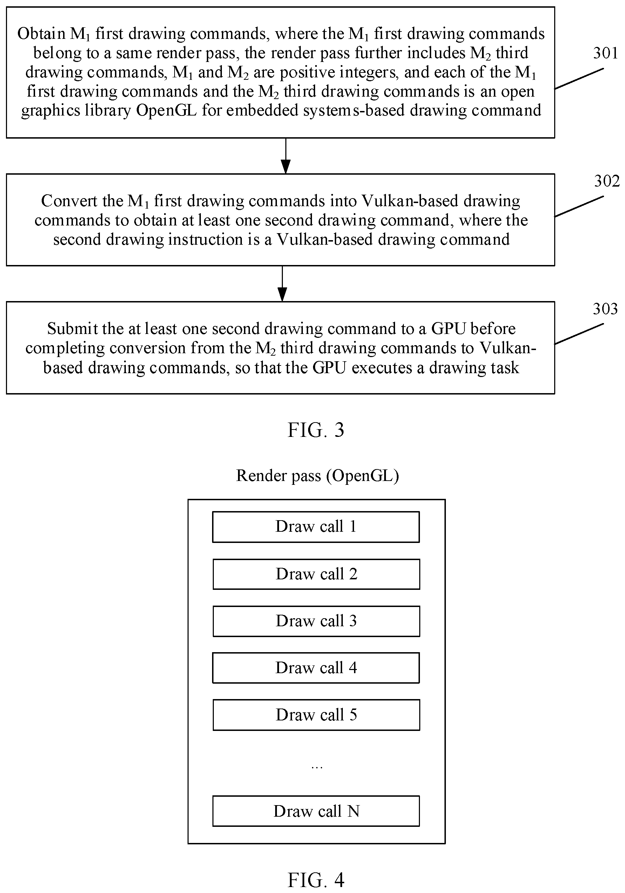

The following describes in detail steps of the drawing command processing method provided in embodiments with reference to FIG. 3. As shown in FIG. 3, the drawing command processing method may include the following steps.

301: Obtain M₁ first drawing commands, where the M₁ first drawing commands belong to a same render pass, the render pass further includes M₂ third drawing commands, M₁ and M₂ are positive integers, and each of the M₁ first drawing commands and the M₂ third drawing commands is an open graphics library OpenGL for embedded systems-based drawing command.

In this embodiment of the present disclosure, a CPU in a terminal device may obtain the M₁ first OpenGL-based drawing commands. The M₁ first OpenGL-based drawing commands may be understood as follows: The M₁ first drawing commands are used to call an OpenGL-related API.

For example, when the terminal device is a terminal and a system of the terminal is an Android system, an OpenGL ES graphics library of the Android system may be used to render an image frame in a game application. Before the graphics library is used, a running environment of the graphics library is initialized by calling an eglInitialize function (an initialization function). In addition, a hook (hook) function may be added to the eglInitialize function, to intercept and obtain the M₁ first drawing commands by using the hook function.

It should be understood that when the terminal device is a mobile phone, the CPU herein may be specifically an application processor AP.

In this embodiment of the present disclosure, the first drawing command may carry a drawing parameter. Optionally, the drawing parameter may include one or more of the following: vertex information of a drawing model, color information, rendering material information, or the like.

In this embodiment of the present disclosure, the M₁ first drawing commands belong to the same render pass, and the render pass is one render pass in a to-be-rendered image frame. FIG. 4 is a schematic diagram of one render pass. As shown in FIG. 4, an OpenGL render pass may include a plurality of drawing commands (a draw call 1 to a draw call N). Specifically, the render pass may include N drawing commands arranged in a preset order, and the preset order indicates an execution order of the drawing commands. The execution order is a sequence that is of code including the rendering instructions and that is specified in a game file, and the sequence indicates a time sequence in which the CPU processes the drawing commands. In this embodiment of the present disclosure, the M₁ first drawing commands are first M₁ drawing commands arranged in the N drawing commands.

Specifically, the CPU may successively obtain the first drawing commands according to an arrangement order of the drawing commands in the render pass. Each time one first drawing command is obtained, the CPU converts the first drawing command into a Vulkan-based drawing command to obtain a corresponding second drawing command until an (M₁)^{th} first drawing command in the render pass is obtained. In other words, the CPU completes conversion of some drawing commands (the first M₁ drawing commands) in the render pass.

Different from the conventional technology in which drawing commands are submitted to the CPU only after conversion of all the drawing commands in the render pass is completed, in this embodiment of the present disclosure, drawing commands are submitted to a GPU after conversion of some drawing commands in the render pass is completed.

The following first describes how the CPU determines which drawing commands in the render pass are submitted.

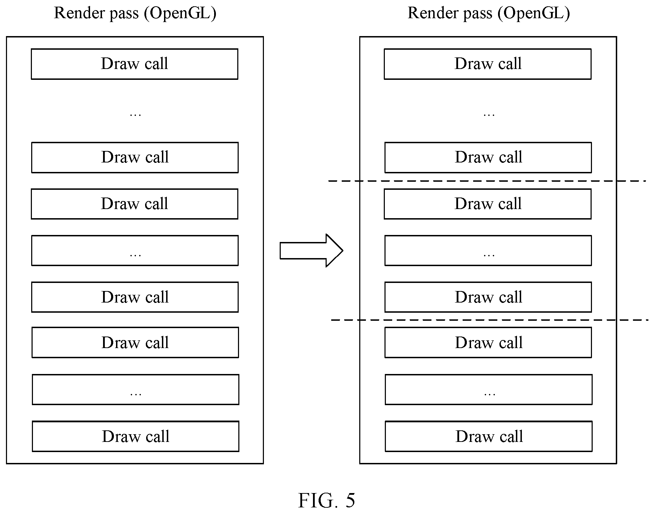

In an implementation, the CPU may determine, based on a pre-configured render pass segmentation model, which drawing commands in the render pass are submitted. The foregoing render pass segmentation model may specify that the CPU may submit the drawing commands to the CPU after completing conversion of the first M₁ drawing commands arranged in the render pass. In some implementations, the foregoing render pass segmentation model may specify how to segment the drawing commands in the render pass (for example, the render pass segmentation model may specify a quantity of segments into which the drawing commands in the render pass are segmented and a quantity of drawing commands included in each segment obtained through segmentation). For example, refer to FIG. 5. For a render pass in FIG. 5, a render pass segmentation model may specify that drawing commands in the render pass are segmented into three parts (or specify that there are two segmentation points). Further, the CPU may submit converted drawing instructions to the GPU each time after completing conversion of each part of segmented drawing instructions.

In this embodiment of the present disclosure, the CPU may collect statistics on drawing commands submitted by each render pass of each frame of a game. Considering that a quantity of render passes and a quantity of drawing commands of the render pass are stable in most scenarios of the game, each render pass segmentation point may be segmented based on historical submission information, and used for subsequent segmentation of the render pass of each frame. Specifically, when each frame of the game ends, the CPU may collect statistics on a quantity of drawing commands and a quantity of vertices of each render pass of the frame, and then may generate a render pass segmentation model based on collected information about the drawing commands of the frame, and cache the render pass segmentation model for subsequent actual segmentation.

In this embodiment of the present disclosure, the CPU may configure different render pass segmentation models for render passes with different features. In other words, for render passes that include different quantities of drawing commands and indicate different quantities of vertices that need to be drawn in the drawing commands, the CPU may configure different render pass segmentation models.

In an implementation, the render passes that include different quantities of drawing commands may correspond to different render pass segmentation models. For example, for a render pass that includes a large quantity of drawing commands or that indicates an excessive quantity of vertices that need to be drawn in the drawing commands, a corresponding render pass segmentation model may specify that the drawing commands in the render pass are segmented into more parts. Specifically, if a quantity of draw calls and a quantity of vertices of a render pass of a current frame are large, it indicates that the render pass is heavily loaded. After the draw calls are converted to Vulkan-based commands, the Vulkan-based commands need to wait for a long time before being completely submitted to the GPU. Therefore, the render pass needs to be segmented. A segmentation point is added to the original render pass to segment the render pass into several render passes, and the Vulkan-based commands are submitted to the GPU.

In this embodiment of the present disclosure, the render pass segmentation model may specify that a render pass currently processed by the CPU needs to be segmented. In this case, the CPU obtains at least one second drawing command after completing conversion of the first M₁ first drawing commands of the render pass, and submits the at least one second drawing command obtained through conversion to the GPU.

It should be understood that the foregoing render pass segmentation model is merely a manner in which the CPU determines which drawing commands in the render pass are submitted. Alternatively, the CPU may determine which drawing commands in the render pass are submitted in another manner. This is not limited in the present disclosure.

302: Convert the M₁ first drawing commands into Vulkan-based drawing commands to obtain the at least one second drawing command, where the second drawing instruction is a Vulkan-based drawing command.

In this embodiment of the present disclosure, the terminal device further includes an image processing buffer, and the CPU may store the at least one second drawing command to the image processing buffer after converting the M₁ first drawing commands into the Vulkan-based drawing commands to obtain the at least one second drawing command.

It should be understood that the CPU may successively obtain the first drawing commands according to the arrangement order of drawing commands in the render pass. Each time one first drawing command is obtained, the CPU converts the first drawing command into a Vulkan-based drawing command to obtain a corresponding second drawing command until the (M₁)^{th} first drawing command in the render pass is obtained, and converts the (M₁)^{th} first drawing command into a Vulkan-based drawing command. Generally, one corresponding second drawing command may be obtained by converting one first drawing command into a Vulkan-based drawing command. However, in some scenarios, a plurality of corresponding second drawing commands may be obtained by converting one first drawing command into a Vulkan-based drawing command. Alternatively, one first drawing command is eliminated after being converted into a Vulkan-based drawing command.

303: Submit the at least one second drawing command to the GPU before completing conversion from the M₂ third drawing commands to Vulkan-based drawing commands, so that the GPU executes a drawing task.

In this embodiment of the present disclosure, if the CPU determines that a quantity of currently converted first drawing commands in the render pass reaches M₁, the CPU may submit the at least one second drawing command to the GPU, so that the GPU executes the drawing task. Specifically, the CPU may send an indication to a graphics buffer that stores the at least one second drawing command, so that the GPU obtains the at least one second drawing command from the graphics buffer.

In this embodiment of the present disclosure, after converting the M₁ first drawing commands into the Vulkan-based drawing commands to obtain the at least one second drawing command, the CPU may perform vkQueueSubmit submission, so that the at least one second drawing command obtained through conversion may be submitted to the GPU as one Vulkan render pass.

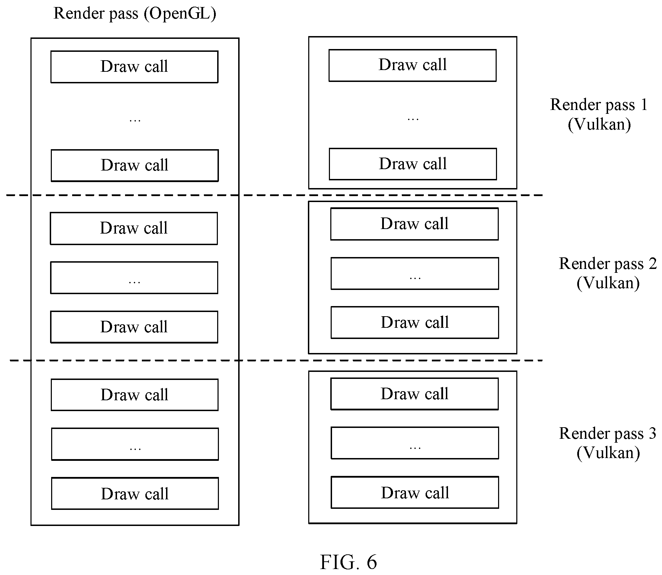

For example, refer to FIG. 6. Drawing commands in a render pass (OpenGL) are segmented into three parts. After completing conversion of drawing commands of a first part, the CPU obtains a render pass 1 (Vulkan), and the render pass 1 includes at least one second rendering command. Then, the CPU may submit the drawing commands included in the render pass 1 to the GPU.

In this embodiment of the present disclosure, before submitting the at least one second drawing command to the GPU, the CPU may further determine whether a to-be-submitted drawing command stored in the image processing buffer meets a first preset condition and whether the GPU meets a second preset condition, in addition to that the quantity of currently converted first drawing commands in the render pass that has reached M₁. The first preset condition includes at least one of the following: A quantity of to-be-submitted drawing commands in the image processing buffer reaches M₁; and a quantity of vertices that need to be drawn for the to-be-submitted drawing command in the image processing buffer is equal to or exceeds a preset value. A quantity of vertices that need to be drawn for the M₁ second drawing commands is equal to or exceeds the preset value. The second preset condition includes at least one of the following: Current load of the GPU is less than a preset value; and a current drawing frame rate of the GPU is less than a preset frame rate.

In this embodiment of the present disclosure, if the CPU determines that a quantity of currently converted drawing commands meets a requirement, the CPU may further obtain the current load of the GPU, and determine whether the current load of the GPU is less than the preset value (which may also referred to as a load threshold that may be flexibly configured based on different scenarios). If the current load of the GPU is less than the load threshold, it indicates that the GPU is currently in an idle state. In this case, the converted drawing commands may be submitted to the GPU. Otherwise, a next draw call continues to be processed until the load of the GPU is less than the preset value, or the converted drawing commands are submitted to the GPU after conversion of all the drawing commands in the rendering instruction is completed.

Similarly, if the CPU determines that the quantity of currently converted drawing commands meets the requirement, the CPU may further obtain the current drawing frame rate of the GPU, and determine whether the current drawing frame rate of the GPU is less than the preset frame rate (the preset frame rate may be flexibly configured based on different scenarios). If the current drawing frame rate of the GPU is less than the preset frame rate, the converted drawing commands may be submitted to the GPU. Otherwise, a next draw call continues to be processed until the load of the drawing frame rate of the GPU is less than the preset frame rate, or the converted drawing commands are submitted to the GPU after conversion of all the drawing commands in the rendering instruction is completed.

It should be understood that, when no technical contradiction exists, the conditions in the first preset condition and the second preset condition may be mutually combined to form a basis for determining whether to submit the at least one second drawing command to the GPU.

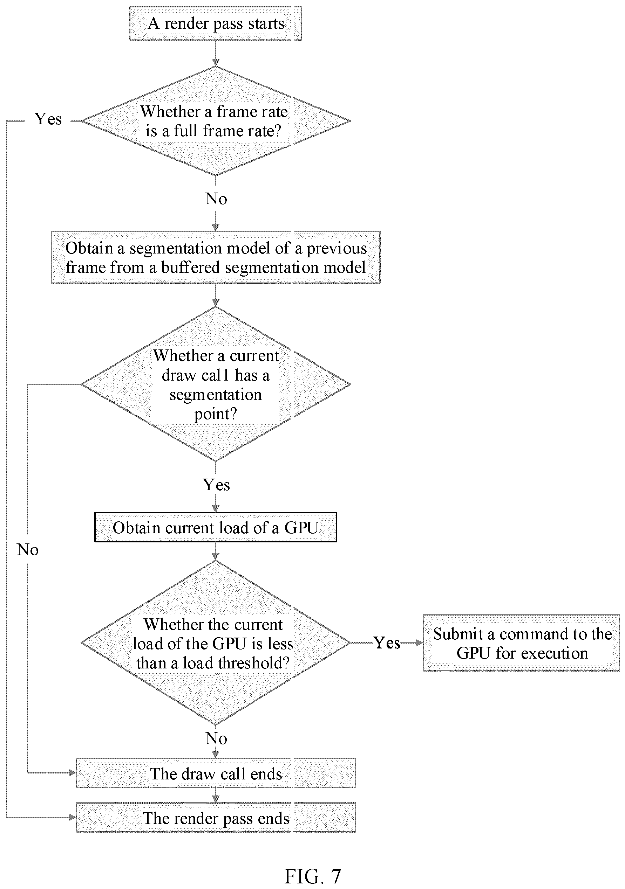

For example, refer to FIG. 7. When the CPU processes the drawing command in the render pass, the CPU may obtain the current drawing frame rate of the GPU. If the frame rate is a full frame rate (or higher than or equal to the preset frame rate), the render pass ends. If the frame rate is not the full frame rate (or lower than the preset frame rate), a segmentation model of a previous frame is obtained from a buffered segmentation model (referred to as the render pass segmentation model in the foregoing embodiment). When the drawing command in the render pass is processed, whether a segmentation point exists is determined each time after a drawing command is converted. If the segmentation point exists, the current load of the GPU is obtained. In addition, when the load of the GPU is less than the load threshold, a converted to-be-submitted drawing command is submitted to the GPU. If no segmentation point exists or the current load of the GPU is higher than the load threshold, conversion of a next drawing command in the render pass is continued.

In a possible implementation, the CPU may further obtain the current drawing frame rate and the current load of the GPU, and determine a value of M₁ based on the drawing frame rate and the load. When the drawing frame rate of the GPU and a drawing frame rate of a DDR are the same, higher load indicates larger M₁; and when the load of the GPU and load of the DDR are the same, a higher drawing frame rate indicates larger M₁.

In this embodiment, the value of M₁ may be determined based on the current drawing frame rate and the current load of the GPU. When the load of the GPU is large, because the GPU is in a busy state at this case, the CPU can submit drawing commands to the GPU only after completing conversion of a large quantity of drawing commands. This reduces overheads of submitting the drawing commands by the CPU on a premise that it is ensured that the GPU does not have a long idle time. In addition, when the drawing frame rate of the GPU is high, it is difficult to increase the drawing frame rate of the GPU even if usage of the GPU is increased. Therefore, the CPU can submit the drawing commands to the GPU only after completing conversion of the large quantity of drawing commands. This reduces the overheads of submitting the drawing commands by the CPU on the premise that it is ensured that the GPU does not have the long idle time. The value of M₁ is determined based on the current drawing frame rate and the current load of the GPU, so that a quantity of drawing commands submitted each time is dynamically controlled.

In this embodiment of the present disclosure, after submitting the at least one second drawing command to the GPU, the CPU may further convert the M₂ third drawing commands into the Vulkan-based drawing commands to obtain at least one fourth drawing command, where the fourth drawing instruction is a Vulkan-based drawing command, and submit the at least one fourth drawing command to the GPU, so that the GPU executes a drawing task. In other words, after submitting the at least one second drawing command to the GPU, the CPU may convert the M₂ third drawing commands into the Vulkan-based drawing commands to obtain the at least one fourth drawing command, and submit the at least one fourth drawing command to the GPU, so that the GPU executes the drawing task. In other words, the CPU may further segment or submit all of remaining unconverted drawing commands in the render pass, and submit some or all of the remaining unconverted drawing commands in the render pass to the GPU after completing conversion of some or all of the drawing commands in the remaining unconverted drawing commands in the render pass.

Different from the conventional technology in which the converted drawing commands are submitted to the CPU only after conversion of all the drawing commands in the render pass is completed, in this embodiment of the present disclosure, drawing commands are submitted to the GPU after conversion of some drawing commands in the render pass is completed, to avoid low GPU utilization caused because the CPU does not submit Vulkan-based commands to the GPU in time in a process of converting OpenGL-based commands into the Vulkan-based commands. This can maximize GPU utilization in some game scenarios, and improve a frame rate.

This embodiment of the present disclosure provides the drawing command processing method. The method is applied to the terminal device, the terminal device includes the graphics processing unit GPU, and the method includes: obtaining the M₁ first drawing commands, where the M₁ first drawing commands belong to the same render pass, the render pass further includes the M₂ third drawing commands, M₁ and M₂ are positive integers, and each of the M₁ first drawing commands and the M₂ third drawing commands is an open graphics library OpenGL for the embedded systembased drawing command; converting the M₁ first drawing commands into the Vulkan-based drawing commands to obtain the at least one second drawing command, where the second drawing instruction is a Vulkan-based drawing command; and submitting the at least one second drawing command to the GPU before completing conversion from the M₂ third drawing commands into the Vulkan-based drawing commands, so that the GPU executes the drawing task. Drawing commands are submitted to the GPU after conversion of some drawing commands in the render pass is completed, to avoid low GPU utilization caused because the CPU does not submit the Vulkan-based commands to the GPU in time in the process of converting the OpenGL-based commands into the Vulkan-based commands. This can maximize GPU utilization in some game scenarios, and improve the frame rate.

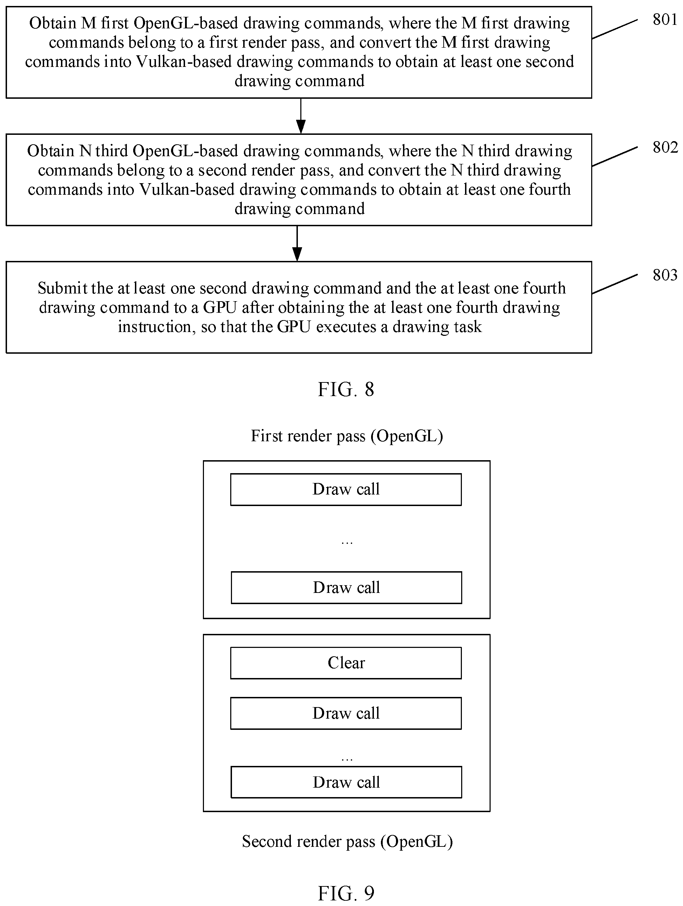

FIG. 8 is a schematic diagram of a drawing command processing method according to an example of the present disclosure. The drawing command processing method provided in this example of the present disclosure may be applied to a terminal device, the terminal device includes a graphics processing unit GPU, and the method includes the following steps.

801: Obtain M first OpenGL-based drawing commands, where the M first drawing commands belong to a first render pass, and convert the M first drawing commands into Vulkan-based drawing commands to obtain at least one second drawing command.

In this example of the present disclosure, a CPU in the terminal device may obtain the M first OpenGL-based drawing commands. The M first OpenGL-based drawing commands may be understood as follows: The M first drawing commands are used to call an OpenGL-related API.

For example, when the terminal device is a terminal and a system of the terminal is an Android system, an OpenGL ES graphics library of the Android system may be used to render an image frame in a game application. Before the graphics library is used, a running environment of the graphics library is initialized by calling an eglInitialize function (an initialization function). In addition, a hook (hook) function may be added to the eglInitialize function, to intercept and obtain the M first drawing commands by using the hook function.

Specifically, the CPU may successively obtain the first drawing commands according to an arrangement order of the drawing commands in the render pass. Each time one first drawing command is obtained, the CPU converts the first drawing command into a Vulkan-based drawing command to obtain a corresponding second drawing command until an M^{th} first drawing command in the render pass is obtained.

In this example of the present disclosure, the M first drawing commands belong to the same render pass, the render pass is a first render pass in a to-be-rendered image frame, and the first render pass may include N drawing commands arranged in a preset order. The preset order indicates an execution order of the drawing commands. The execution order is a sequence that is of code including the rendering instructions and that is specified in a game file, and the sequence indicates a time sequence in which the CPU processes the drawing commands. In this embodiment of the present disclosure, the M first drawing commands are last M drawing commands arranged in the N drawing commands. Specifically, when M and N are equal, it indicates that the first render pass includes the M first drawing commands.

802: Obtain N third OpenGL-based drawing commands, where the N third drawing commands belong to a second render pass, and convert the N third drawing commands into Vulkan-based drawing commands to obtain at least one fourth drawing command.

In this example of the present disclosure, the terminal device further includes an image processing buffer, and the CPU may store the at least one second drawing command to the image processing buffer after converting the M first drawing commands into the Vulkan-based drawing commands to obtain the at least one second drawing command.

Different from the conventional technology in which drawing commands are submitted to the CPU only after conversion of all the drawing commands in the render pass is completed, in this embodiment of the present disclosure, drawing commands are not directly submitted to the GPU after conversion of some drawing commands in the render pass is completed. Instead, conversion of a drawing instruction in a next render pass (the second render pass) is continued.

In a possible implementation, M and N are less than 50. In some scenarios, if a quantity of drawing instructions (draw calls) of the render pass is small, whether drawing commands in a plurality of render passes can be converted before converted drawing commands are submitted to the GPU together can be analyzed.

During combination, because there are some features between the first render pass and the second render pass, some instructions may be deleted, to reduce DDR copies of the render pass, thereby reducing power consumption. The following provides descriptions in which some instructions may be deleted when which features exist between the first render pass and the second render pass.

In this example of the present disclosure, the M first drawing commands and the N third drawing commands are used to draw a same image frame, the M first drawing commands are used to draw a target scenario, and the N third drawing commands are used to perform at least one of the following operations on the target scenario: drawing a special effect, performing coloring, and drawing a user interface UI. In other words, the drawing command in the second render pass is drawn based on a drawing result of the drawing command in the first render pass (drawing content may include at least one of drawing the special effect, performing coloring, and drawing the user interface UI).

In a possible implementation, the first render pass and the second render pass are adjacent, the drawing instruction in the second render pass is configured to be executed after the drawing instruction in the first render pass is executed, and the N third drawing commands include a first target drawing command. The first target drawing command is used to clear a drawing result obtained by executing the M first drawing commands. The second render pass includes the N third drawing commands arranged in a preset order, the preset order indicates an execution order of the drawing commands, and the first target drawing command is a drawing command that is the first one arranged in the N third drawing commands.

In a possible implementation, the N third drawing commands include a second target drawing command, the second target drawing command is executed after the first target drawing command is executed, and the second target drawing command is used to obtain the drawing result obtained by executing the M first drawing commands.

Generally, a start drawing instruction of each render pass is a clear command used to clear a drawing result obtained by executing a drawing command in a previous render pass. In OpenGL, when a drawing command in a latter render pass is drawn based on the drawing result of the drawing command in the previous render pass, the latter render pass further includes a command used to obtain the drawing result of the drawing command in the previous render pass (in other words, 1:1 sampling is performed on a drawing result of the first render pass). For example, refer to FIG. 9. The second render pass and the first render pass are adjacent, and a start drawing command of the second render pass is a clear command.

In this example of the present disclosure, the at least one fourth drawing command does not include a drawing command used to clear a drawing result obtained by executing the at least one second drawing command, and the at least one fourth drawing command does not include a drawing command used to obtain the drawing result obtained by executing the at least one second drawing command.

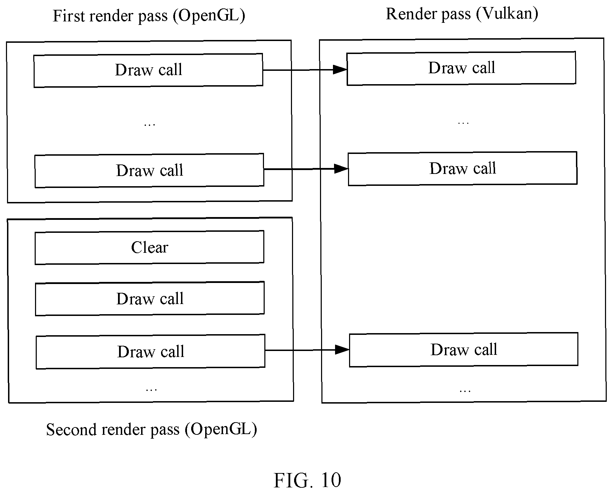

In other words, the at least one fourth drawing command obtained by converting the N second drawing commands does not have the clear command used to clear the drawing result obtained by executing the at least one second drawing command and the drawing command used to obtain the drawing result obtained by executing the at least one second drawing command. Specifically, refer to FIG. 10. The second render pass and the first render pass are adjacent, a start drawing command of the second render pass is a clear command, and a drawing command following the clear command is used to obtain the drawing result obtained by executing the at least one second drawing command. In the at least one fourth drawing command obtained by converting the N second drawing commands, the clear command and the drawing command following the clear command are excluded. It is equivalent to combining two render passes into one, and a first clear command in the second render pass and a drawing command following the clear command need to be skipped. Content of the second render pass is directly drawn on the drawing result of the first render pass, which is equivalent to reducing two DDR data copies.

803: Submit the at least one second drawing command and the at least one fourth drawing command to the GPU after obtaining the at least one fourth drawing instruction, so that the GPU executes a drawing task.

In this example of the present disclosure, after converting the M first drawing commands into the Vulkan-based drawing commands to obtain the at least one second drawing command, and after converting the N third drawing commands into the Vulkan-based drawing commands to obtain the at least one fourth drawing command, the CPU may perform vkQueueSubmit submission, so that the at least one second drawing command and the at least one fourth drawing command that are obtained through conversion are submitted to the GPU as one Vulkan render pass.

In this embodiment of the present disclosure, an example in which the N third drawing commands are used to draw the special effect on the target scenario drawn on the first render pass is used. A main scenario is drawn on the first render pass, and the special effect is drawn on the second render pass. In this case, in a process of converting to Vulkan, a feature of a Vulkan render sub-pass may be used. Main scenario drawing of the first render pass is converted into a Vulkan render sub-pass 1, and special effect drawing of the render pass is converted into a Vulkan render sub-pass 2. After the main scenario is drawn, the special effect is drawn on the render sub-pass 1 instead of being written from the GPU to a DDR.

This example of the present disclosure provides a drawing command processing method. The method is applied to the terminal device, the terminal device includes the graphics processing unit GPU, and the method includes: obtaining the M first OpenGL-based drawing commands, where the M first drawing commands belong to the first render pass, and converting the M first drawing commands into the Vulkan-based drawing commands to obtain the at least one second drawing command; obtaining the N third OpenGL-based drawing commands, where the N third drawing commands belong to the second render pass, and converting the N third drawing commands into the Vulkan-based drawing commands to obtain the at least one fourth drawing command; and submitting the at least one second drawing command and the at least one fourth drawing command to the GPU after obtaining the at least one fourth drawing instruction, so that the GPU executes the drawing task. Drawing commands are not directly submitted to the GPU after conversion of some drawing commands in the render pass is completed. Instead, conversion of the drawing instruction in the next render pass (the second render pass) is continued, thereby reducing a render pass with one resolution, and further reducing power consumption of the terminal device. In some scenarios, a quantity of DDR data copies is reduced, thereby further reducing power consumption.

The following describes an architecture of the present disclosure from a perspective of product implementation. In an application scenario of the present disclosure, an OpenGL game may be converted into Vulkan for running on a game of a mobile terminal.

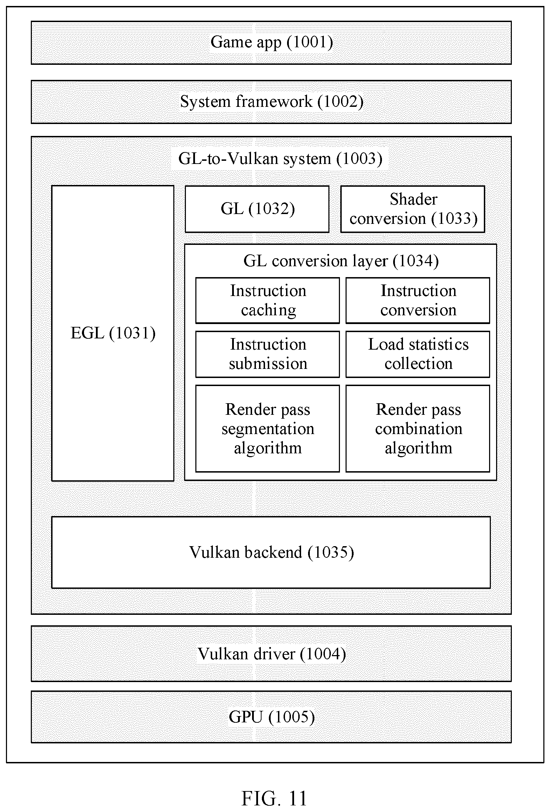

FIG. 11 is a schematic diagram of a system architecture according to the present disclosure. The system architecture includes five parts: a game App (1001), a system framework (1002), a GL-to-Vulkan system (1003) (GL may also be referred to as OpenGL), a Vulkan driver (1004), and a GPU (1005). Embodiment of the present disclosure may be applied to the OpenGL-to-Vulkan system part. The OpenGL-to-Vulkan system may include the following components: EGL processing (1031), GL instruction processing (1032), shader conversion (1033), and GL conversion layer (1034). The GL conversion layer is responsible for GL instruction caching, GL instruction conversion, instruction submission, load statistics collection, a render pass segmentation algorithm, and a render pass combination algorithm. The render pass segmentation algorithm may be used to perform the method described in FIG. 3 to FIG. 7 in the foregoing embodiments and the corresponding embodiments. The render pass combination algorithm may be used to perform the method described in FIG. 8 to FIG. 10 in the foregoing embodiments and the corresponding embodiments.

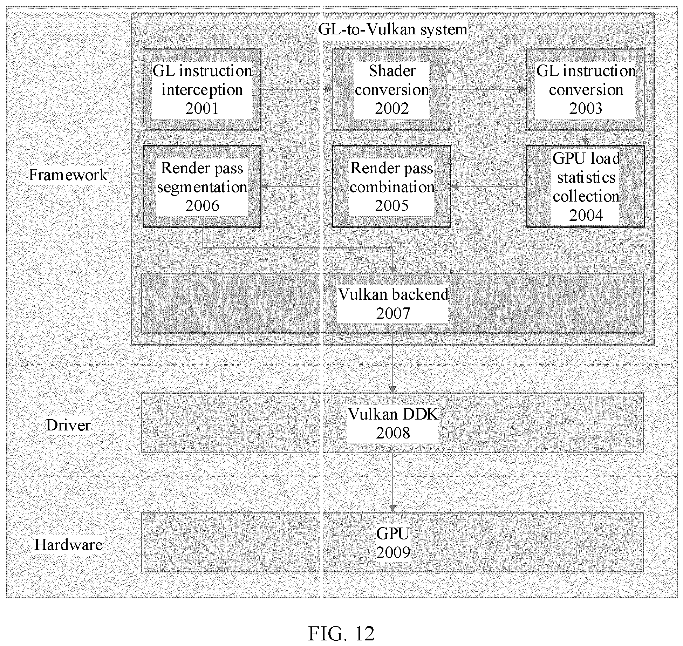

This embodiment of the present disclosure may be included in a platform firmware framework. A GL instruction is intercepted from the framework and converted into a Vulkan instruction, and render pass combination and segmentation are performed for optimization. As shown in FIG. 12, the GL-to-Vulkan system acts on a platform framework. A GL interception module (2001) intercepts a GL instruction before an OpenGL instruction is called to an OpenGL DDK, and the GL instruction in converted through a shader conversion module (2002) and a GL instruction conversion module (2003). A GPU load statistics collection module (2004) is responsible for estimating load of the GPU based on a submitted historical instruction, and caching historical submission information. A render pass combination module (2005) is responsible for an algorithm of render pass combination in a conversion process. A render pass segmentation module (2006) is responsible for an algorithm of render pass segmentation in the conversion process. A combined render pass or segmented render passes is/are submitted to a Vulkan DDK (2008) through a Vulkan backend (2007), and finally to the hardware resource GPU (2009) by the DDK.

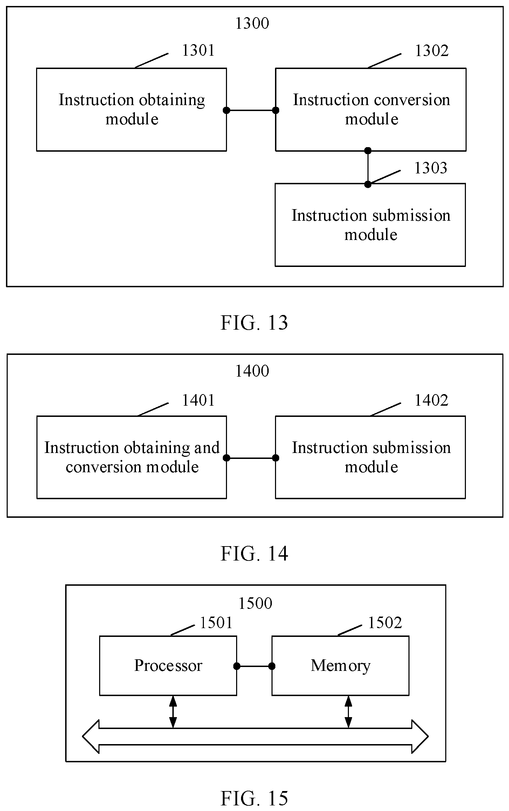

Refer to FIG. 13. An embodiment of the present disclosure further provides a drawing command processing apparatus. The apparatus is used in a terminal device, the terminal device includes a graphics processing unit GPU, and the apparatus includes:
an instruction obtaining module 1301, configured to obtain M₁ first drawing commands, where the M₁ first drawing commands belong to a same render pass, the render pass further includes M₂ third drawing commands, M₁ and M₂ are positive integers, and each of the M₁ first drawing commands and the M₂ third drawing commands is an open graphics library OpenGL for embedded systems-based drawing command;
an instruction conversion module 1302, configured to convert the M₁ first drawing commands into Vulkan-based drawing commands to obtain at least one second drawing command, where the second drawing instruction is a Vulkan-based drawing command; and
an instruction submission module 1303, configured to submit the at least one second drawing command to the GPU before completing conversion from the M₂ third drawing commands to Vulkan-based drawing commands, so that the GPU executes a drawing task.

In a possible implementation, the render pass includes N drawing commands arranged in a preset order, and the preset order indicates an execution order of the drawing commands. The M₁ first drawing commands are first M₁ drawing commands arranged in the N drawing commands, and N is greater than or equal to a positive integer of a sum of M₁ and M₂.

In a possible implementation, the terminal device further includes an image processing buffer, and the apparatus further includes: a storage module, configured to: store the at least one second drawing command to the image processing buffer after the M₁ first drawing commands are converted into the Vulkan-based drawing commands to obtain the at least one second drawing command; and
the instruction submission module is configured to submit the at least one second drawing command to the GPU on a basis that a to-be-submitted drawing command stored in the image processing buffer meets a first preset condition, where the first preset condition includes at least one of the following:
a quantity of to-be-submitted drawing commands in the image processing buffer reaches M₁; and
a quantity of vertices that need to be drawn for the to-be-submitted drawing command in the image processing buffer is equal to or exceeds a preset value, where a quantity of vertices that need to be drawn for the at least one second drawing command is equal to or exceeds the preset value.

In a possible implementation, the instruction submission module is configured to submit the at least one second drawing command to the GPU on a basis that the GPU meets a second preset condition, where the second preset condition includes at least one of the following:
current load of the GPU is less than a preset value; and
a current drawing frame rate of the GPU is less than a preset frame rate.

In a possible implementation, the apparatus further includes:
a determining module, configured to: obtain the current drawing frame rate and the current load of the GPU; and
determine a value of M₁ based on the drawing frame rate and the load, where when the drawing frame rate of the GPU and a drawing frame rate of a DDR are the same, higher load indicates larger M₁; and when the load of the GPU and load of the DDR are the same, a higher drawing frame rate indicates larger M₁.

In a possible implementation, the instruction conversion module is configured to convert the M₂ third drawing commands into the Vulkan-based drawing commands to obtain at least one fourth drawing command, and the fourth drawing instruction is a Vulkan-based drawing command; and
the instruction submission module is configured to submit the at least one fourth drawing command to the GPU, so that the GPU executes a drawing task.

For specific descriptions of the drawing command processing apparatus described in FIG. 13, refer to the descriptions in FIG. 4 to FIG. 7 and the corresponding embodiments, and details are not described herein again.

Refer to FIG. 14. An embodiment of the present disclosure further provides a drawing command processing apparatus. The apparatus is used in a terminal device, the terminal device includes a graphics processing unit GPU, and the apparatus includes:
an instruction obtaining and conversion module 1401, configured to: obtain M first OpenGL-based drawing commands, where the M first drawing commands belong to a first render pass, and convert the M first drawing commands into Vulkan-based drawing commands to obtain at least one second drawing command; and
obtain N third OpenGL-based drawing commands, where the N third drawing commands belong to a second render pass, and convert the N third drawing commands into Vulkan-based drawing commands to obtain at least one fourth drawing command; and
an instruction submission module 1402, configured to submit the at least one second drawing command and the at least one fourth drawing command to the GPU after obtaining the at least one fourth drawing instruction, so that the GPU executes a drawing task.

In a possible implementation, M and N are less than 50.

In a possible implementation, the first render pass and the second render pass are adjacent, and a drawing instruction in the second render pass is configured to be executed after a drawing instruction in the first render pass is executed.

In a possible implementation, the M first drawing commands are used to draw a target scenario, and the N third drawing commands are used to perform at least one of the following operations on the target scenario:
drawing a special effect, performing coloring, and drawing a user interface UI.

In a possible implementation, the N third drawing commands include a first target drawing command, the first target drawing command is used to clear a drawing result obtained by executing the M first drawing commands, and the at least one fourth drawing command does not include a drawing command used to clear a drawing result obtained by executing the at least one second drawing command.

In a possible implementation, the second render pass includes the N third drawing commands arranged in a preset order, the preset order indicates an execution order of the drawing commands, and the first target drawing command is a drawing command that is the first one arranged in the N third drawing commands.

In a possible implementation, the N third drawing commands include a second target drawing command, the second target drawing command is executed after the first target drawing command is executed, the second target drawing command is used to obtain the drawing result obtained by executing the M first drawing commands, and the at least one fourth drawing command does not include a drawing command used to obtain the drawing result obtained by executing the at least one second drawing command.

In a possible implementation, the M first drawing commands and the N third drawing commands are used to draw a same image frame.

For specific descriptions of the drawing command processing apparatus described in FIG. 14, refer to the descriptions in FIG. 8 to FIG. 10 and the corresponding embodiments, and details are not described herein again.

FIG. 15 is a schematic diagram of a structure of a terminal device 1500 according to the present disclosure. As shown in FIG. 15, the terminal device includes a processor 1501 and a memory 1502, and the processor includes a central processing unit CPU and a graphics processing unit GPU. The GPU supports target extension in an open graphics library for embedded systems OpenGL ES, and the CPU is configured to obtain code in the memory to perform the steps in the embodiments described in FIG. 3 to FIG. 10.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present disclosure, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the present disclosure may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the present disclosure essentially, or the part contributing to the conventional technology, or all or some of the technical solutions may be implemented in a form of a software product. The computer software product is stored in a storage medium and includes several instructions for instructing a computer device (which may be a personal computer, a server, another network device) to perform all or some of the steps of the methods described in the embodiment in FIG. 2 of the present disclosure. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A drawing command processing method, wherein the method is applied to a terminal device, the terminal device comprises a graphics processing unit, GPU, and the method comprises:
obtaining (301) M₁ first drawing commands, wherein the M₁ first drawing commands belong to a same render pass, the render pass further comprises M₂ third drawing commands, M₁ and M₂ are positive integers, and each of the M₁ first drawing commands and the M₂ third drawing commands is an open graphics library OpenGL for embedded systems-based drawing command;
converting (302) the M₁ first drawing commands into Vulkan-based drawing commands to obtain at least one second drawing command, wherein the second drawing command is a Vulkan-based drawing command; and
submitting (303) the at least one second drawing command to the GPU before completing conversion from the M₂ third drawing commands to Vulkan-based drawing commands, so that the GPU executes a drawing task;
wherein the method further comprises:
obtaining the current drawing frame rate and the current load of the GPU; and
determining a value of M₁ based on the drawing frame rate and the load, wherein when the drawing frame rate of the GPU and a drawing frame rate of a DDR are the same, the higher load indicates the larger M₁; and when the load of the GPU and load of the DDR are the same, the higher drawing frame rate indicates the larger M₁.

2. The method according to claim 1, wherein the render pass comprises N drawing commands arranged in a preset order, the preset order indicates an execution order of the drawing commands, the M₁ first drawing commands are first M₁ drawing commands arranged in the N drawing commands, and N is greater than or equal to a positive integer of a sum of M₁ and M₂.

3. The method according to claim 2, wherein the terminal device further comprises an image processing buffer, and the method further comprises: storing the at least one second drawing command to the image processing buffer after converting the M₁ first drawing commands into the Vulkan-based drawing commands to obtain the at least one second drawing command; and
the submitting the at least one second drawing command to the GPU before completing conversion from the M₂ third drawing commands to Vulkan-based drawing commands comprises:
submitting the at least one second drawing command to the GPU on a basis that a to-be-submitted drawing command stored in the image processing buffer meets a first preset condition, wherein the first preset condition comprises at least one of the following:
a quantity of to-be-submitted drawing commands in the image processing buffer reaches M₁; and
a quantity of vertices that need to be drawn for the to-be-submitted drawing command in the image processing buffer is equal to or exceeds a preset value, wherein a quantity of vertices that need to be drawn for the at least one second drawing command is equal to or exceeds the preset value.

4. The method according to any one of claims 1 to 3, wherein the submitting the at least one second drawing command to the GPU comprises:
submitting the at least one second drawing command to the GPU on a basis that the GPU meets a second preset condition, wherein the second preset condition comprises at least one of the following:
current load of the GPU is less than a preset value; and
a current drawing frame rate of the GPU is less than a preset frame rate.

5. The method according to any one of claims 1 to 4, wherein the method further comprises:
converting the M₂ third drawing commands into the Vulkan-based drawing commands to obtain at least one fourth drawing command, wherein the fourth drawing instruction is a Vulkan-based drawing command; and
submitting the at least one fourth drawing command to the GPU, so that the GPU executes a drawing task.

6. A drawing command processing apparatus, wherein the apparatus is used in a terminal device, the terminal device comprises a graphics processing unit GPU, and the apparatus is configured to perform the method according to any one of claims 1 to 5.

7. A non-volatile computer-readable storage medium, wherein the non-volatile computer-readable storage medium comprises computer instructions used to perform the drawing command processing method according to any one of claims 1 to 5.

8. A computer program product, wherein the computer program product comprises code, and when being executed, the code is used to implement the drawing command processing method according to any one of claims 1 to 5.

## Patentansprüche

1. Verfahren zum Verarbeiten von Zeichenbefehlen, wobei das Verfahren auf eine Endgerätevorrichtung angewendet wird, die Endgerätevorrichtung eine Grafikverarbeitungseinheit, GPU, umfasst, und das Verfahren Folgendes umfasst:
Erlangen (301) von M₁ ersten Zeichenbefehlen, wobei die M₁ ersten Zeichenbefehle zu demselben Render-Pass gehören, der Render-Pass ferner M₂ dritte Zeichenbefehle umfasst, M₁ und M₂ positive ganze Zahlen sind, und jeder der M₁ ersten Zeichenbefehle und der M₂ dritten Zeichenbefehle ein auf der offenen Grafikbibliothek OpenGL für eingebettete Systeme basierender Zeichenbefehl ist;
Umwandeln (302) der M₁ ersten Zeichenbefehle in Vulkan-basierte Zeichenbefehle, um mindestens einen zweiten Zeichenbefehl zu erlangen, wobei der zweite Zeichenbefehl ein Vulkan-basierter Zeichenbefehl ist; und
Übermitteln (303) des mindestens einen zweiten Zeichenbefehls an die GPU vor Abschließen einer Umwandlung von den M₂ dritten Zeichenbefehlen in Vulkan-basierte Zeichenbefehle, so dass die GPU eine Zeichenaufgabe ausführt;
wobei das Verfahren ferner Folgendes umfasst:
Erlangen der aktuellen Zeichenrahmenrate und der aktuellen Auslastung der GPU; und
Bestimmen eines Wertes von Mₗ basierend auf der Zeichenrahmenrate und der Auslastung, wobei, wenn die Zeichenrahmenrate der GPU und eine Zeichenrahmenrate einer DDR dieselben sind, die höhere Auslastung die größere M₁ anzeigt; und, wenn die Auslastung der GPU und die Auslastung der DDR dieselben sind, die höhere Zeichenrahmenrate die größere M₁ anzeigt.

2. Verfahren nach Anspruch 1, wobei der Renderdurchgang N Zeichenbefehle umfasst, die in einer voreingestellten Reihenfolge angeordnet sind, die voreingestellte Reihenfolge eine Ausführungsreihenfolge der Zeichenbefehle angibt, die M₁ ersten Zeichenbefehle die ersten M₁ Zeichenbefehle innerhalb der N Zeichenbefehle sind, und N größer oder gleich einer positiven ganzen Zahl einer Summe von M₁ und M₂ ist.

3. Verfahren nach Anspruch 2, wobei die Endgerätevorrichtung ferner einen Bildverarbeitungspuffer umfasst, und das Verfahren ferner Folgendes umfasst: Speichern des mindestens einen zweiten Zeichenbefehls in dem Bildverarbeitungspuffer nach dem Umwandeln der M₁ ersten Zeichenbefehle in Vulkan-basierte Zeichenbefehle, um den mindestens einen zweiten Zeichenbefehl zu erlangen; und das Übermitteln des mindestens einen zweiten Zeichenbefehls an die GPU vor dem Abschließen der Umwandlung von den M₂ dritten Zeichenbefehlen in Vulkan-basierte Zeichenbefehle Folgendes umfasst:
Übermitteln des mindestens einen zweiten Zeichenbefehls an die GPU auf einer Basis, dass ein zu übermittelnder Zeichenbefehl, der in dem Bildverarbeitungspuffer gespeichert ist, eine erste voreingestellte Bedingung erfüllt, wobei die erste voreingestellte Bedingung mindestens eines der folgenden umfasst:
eine Anzahl von zu übermittelnden Zeichenbefehlen in dem Bildverarbeitungspuffer erreicht M₁; und
eine Anzahl von Eckpunkten, die für den zu übermittelnden Zeichenbefehl in dem Bildverarbeitungspuffer gezeichnet werden müssen, ist gleich dem voreingestellten Wert oder übersteigt diesen, wobei eine Anzahl von Eckpunkten, die für den mindestens einen zweiten Zeichenbefehl gezeichnet werden müssen, gleich dem voreingestellten Wert ist oder diesen übersteigt.

4. Verfahren nach einem der Ansprüche 1 bis 3, wobei das Übermitteln des mindestens einen zweiten Zeichenbefehls an die GPU Folgendes umfasst:
Übermitteln des mindestens einen zweiten Zeichenbefehls an die GPU auf einer Basis, dass die GPU eine zweite voreingestellte Bedingung erfüllt, wobei die zweite voreingestellte Bedingung mindestens eines der folgenden umfasst:
die aktuelle Auslastung der GPU ist geringer als ein voreingestellter Wert; und
die aktuelle Zeichenrahmenrate der GPU ist niedriger als die voreingestellte Rahmenrate.

5. Verfahren nach einem der Ansprüche 1 bis 4, wobei das Verfahren ferner Folgendes umfasst:
Umwandeln der M₂ dritten Zeichenbefehle in die Vulkan-basierten Zeichenbefehle, um mindestens einen vierten Zeichenbefehl zu erlangen, wobei die vierte Zeichenanweisung ein Vulkan-basierter Zeichenbefehl ist; und
Übermitteln des mindestens einen vierten Zeichenbefehls an die GPU, so dass die GPU eine Zeichenaufgabe ausführt.

6. Vorrichtung zum Verarbeiten von Zeichenbefehlen, wobei die Vorrichtung in einer Endgerätevorrichtung verwendet wird, die Endgerätevorrichtung eine Grafikverarbeitungseinheit, GPU, umfasst, und die Vorrichtung dazu konfiguriert ist, das Verfahren nach einem der Ansprüche 1 bis 5 durchzuführen.

7. Nichtflüchtiges, computerlesbares Speichermedium, wobei das nichtflüchtige, computerlesbare Speichermedium Computeranweisungen umfasst, die verwendet werden, um das Verfahren zum Verarbeiten von Zeichenbefehlen nach einem der Ansprüche 1 bis 5 durchzuführen.

8. Computerprogrammprodukt, wobei das Computerprogrammprodukt einen Code umfasst, und der Code bei Ausführung verwendet wird, um das Verfahren zum Verarbeiten von Zeichenbefehlen nach einem der Ansprüche 1 bis 5 zu implementieren.

## Revendications

1. Procédé de traitement de commande de dessin, dans lequel le procédé est appliqué à un dispositif terminal, le dispositif terminal comprend une unité de traitement graphique, GPU, et le procédé comprend :
l'obtention (301) de M₁ premières commandes de dessin, dans lequel les M₁ premières commandes de dessin appartiennent à une même passe de rendu, la passe de rendu comprend également M₂ troisièmes commandes de dessin, M₁ et M₂ sont des entiers positifs, et chacune des M₁ premières commandes de dessin et des M₂ troisièmes commandes de dessin est une commande de dessin basée sur la bibliothèque graphique ouverte OpenGL pour systèmes embarqués ;
la conversion (302) des M₁ premières commandes de dessin en commandes de dessin basées sur Vulkan pour obtenir au moins une deuxième commande de dessin, dans lequel la deuxième commande de dessin est une commande de dessin basée sur Vulkan ; et
la soumission (303) de l'au moins une deuxième commande de dessin au GPU avant de terminer la conversion des M₂ troisièmes commandes de dessin en commandes de dessin basées sur Vulkan, de sorte que le GPU exécute une tâche de dessin ;
dans lequel le procédé comprend également :
l'obtention de la fréquence de trames de dessin actuelle et la charge actuelle du GPU ; et
la détermination d'une valeur de M₁ sur la base de la fréquence de trames de dessin et de la charge, dans lequel lorsque la fréquence de trames de dessin du GPU et une fréquence de trames de dessin d'un DDR sont les mêmes, une charge plus élevée indique le plus grand M₁ ; et lorsque la charge du GPU et une charge de la DDR sont les mêmes, la fréquence de trames de dessin plus élevée indique le plus grand M₁.

2. Procédé selon la revendication 1, dans lequel la passe de rendu comprend N commandes de dessin disposées dans un ordre prédéfini, l'ordre prédéfini indique un ordre d'exécution des commandes de dessin, les M₁ premières commandes de dessin sont de premières M₁ commandes de dessin disposées dans les N commandes de dessin, et N est supérieur ou égal à un entier positif de la somme de M₁ et M₂.

3. Procédé selon la revendication 2, dans lequel le dispositif terminal comprend également un tampon de traitement d'image, et le procédé comprend également : le stockage de l'au moins une deuxième commande de dessin dans le tampon de traitement d'image après avoir converti les M₁ premières commandes de dessin en commandes de dessin basées sur Vulkan pour obtenir l'au moins une deuxième commande de dessin ; et
la soumission de l'au moins une deuxième commande de dessin au GPU avant la de terminer la conversion des M₂ troisièmes commandes de dessin en commandes de dessin basées sur Vulkan comprend :
la soumission de l'au moins une deuxième commande de dessin au GPU sur une base du fait qu'une commande de dessin à soumettre stockée dans le tampon de traitement d'image remplit une première condition prédéfinie, dans lequel la première condition prédéfinie comprend au moins l'une des suivantes :
une quantité de commandes de dessin à soumettre dans le tampon de traitement d'image atteint M₁ ; et
une quantité de sommets qui doivent être dessinés pour la commande de dessin à soumettre dans le tampon de traitement d'image est égale ou supérieure à une valeur prédéfinie, dans lequel une quantité de sommets qui doivent être dessinés pour l'au moins une deuxième commande de dessin est égale ou supérieure à la valeur prédéfinie.

4. Procédé selon l'une quelconque des revendications 1 à 3, dans lequel la soumission de l'au moins une deuxième commande de dessin au GPU comprend :
la soumission de l'au moins une deuxième commande de dessin au GPU sur une base du fait que le GPU remplit une seconde condition prédéfinie, dans lequel la seconde condition prédéfinie comprend au moins l'une des suivantes :
la charge actuelle du GPU est inférieure à une valeur prédéfinie ; et
une fréquence de trame de dessin actuelle du GPU est inférieure à une fréquence de trames prédéfinie.

5. Procédé selon l'une quelconque des revendications 1 à 4, dans lequel le procédé comprend également :
la conversion des M₂ troisièmes commandes de dessin en commandes de dessin basées sur Vulkan pour obtenir au moins une quatrième commande de dessin, dans lequel la quatrième instruction de dessin est une commande de dessin basée sur Vulkan ; et
la soumission de l'au moins une quatrième commande de dessin au GPU, de sorte que le GPU exécute une tâche de dessin.

6. Appareil de traitement de commande de dessin, dans lequel l'appareil est utilisé dans un dispositif terminal, le dispositif terminal comprend une unité de traitement graphique GPU, et l'appareil est configuré pour réaliser le procédé selon l'une quelconque des revendications 1 à 5.

7. Support de stockage non volatil lisible par ordinateur, dans lequel le support de stockage non volatil lisible par ordinateur comprend des instructions de programme informatique utilisées pour réaliser le procédé de commande de dessin selon l'une quelconque des revendications 1 à 5.

8. Produit de programme informatique, dans lequel le produit de programme informatique comprend du code, et lorsqu'il est exécuté, le code est utilisé pour mettre en œuvre le procédé de traitement de commande de dessin selon l'une quelconque des revendications 1 à 5.
